**Europäisches Patentamt**

**European Patent Office**

**Office européen des brevets**

(11) Numéro de publication: **0 130 922**
**B1**

(12) **FASCICULE DE BREVET EUROPÉEN**

(45) Date de publication du fascicule du brevet:
14.10.87

(21) Numéro de dépôt: **84401405.0**

(22) Date de dépôt: **03.07.84**

(51) Int. Cl.⁴: **B 65 D 57/00,** B 65 D 85/48

(54) Eléments intercalaires destinés à séparer des articles en feuilles et lots d'articles réalisés à l'aide de tels éléments.

(30) Priorité: **05.07.83 FR 8311163**

(43) Date de publication de la demande:
**09.01.85 Bulletin 85/2**

(45) Mention de la délivrance du brevet:
**14.10.87 Bulletin 87/42**

(84) Etats contractants désignés:
**BE DE FR GB IT LU NL SE**

(56) Documents cité:
**FR-A-2 548 632**
**GB-A-2 059 905**

(73) Titulaire: **SAINT- GOBAIN VITRAGE, Les Miroirs 18, avenue d'Alsace, F-92400 Courbevoie (FR)**

(72) Inventeur: **Benezet, Jean- Yves, 72 chemin des bezones, F-91310 Montlhery (FR)**
Inventeur: **Lazennec, Jean- Yves, Cité des Merisiers - batiment A, F-91170 Viry Chatillon (FR)**
Inventeur: **Persello, René, 27 rue du Général de Gaulle, F-91160 Longjumeau (FR)**

(74) Mandataire: **Breton, Jean- Claude, SAINT- GOBAIN RECHERCHE 39, quai Lucien Lefranc, F-93300 Aubervilliers Cedex (FR)**

## Description

La présente invention concerne des éléments intercalaires ou entretoises qui ont comme fonction d'éviter tout contact entre deux articles en feuilles, tels que des pare-brise, lors de leur manutention.

La présente invention concerne plus particulièrement des éléments intercalaires susceptibles d'être enlevés sans intervention humaine, lors de la mise en oeuvre desdits articles.

La présente invention concerne également des lots d'articles réalisés à l'aide de tels éléments.

Nombreuses sont les activités industrielles qui exigent, de nos jours, une automatisation de plus en plus poussée des moyens de fabrication. C'est le cas notamment des chaînes de montage dans l'industrie automobile.

Dans cette industrie, l'emploi de robots nécessite que les différentes pièces, entrant dans la constitution d'un véhicule automobile, soient amenées sur la chaîne de montage et rendues disponibles en réduisant l'intervention humaine à sa plus simple expression.

Dans ce but, des efforts ont été entrepris au niveau des dispositifs de manutention ou palettes pour rendre les articles transportés facilement accessibles. C'est le cas notamment du dispositif d'écrit dans la demande de brevet français publiée sous le numéro 2 506 728.

Il demeure toutefois que les articles sont maintenus séparés par des cavaliers intercalaires, qui ne peuvent être ôtés que manuellement.

La présente invention vise un élément intercalaire ou entretoise qui présente tous les avantages des cavaliers connus avec l'avantage supplémentaire de pouvoir être enlevé sans intervention manuelle.

A cet effet, l'invention a pour objet un élément intercalaire pour réaliser des lots d'articles en feuille, ledit élément étant constitué d'une pièce ayant la forme générale d'un L dont une branche est interposée entre deux articles voisins, l'autre branche reposant sur la tranche d'un desdits articles.

Avantageusement les éléments intercalaires auront des profils complémentaires afin de permettre l'emboîtement des éléments contigus.

Suivant l'invention, l'élément intercalaire destiné à séparer deux articles en feuilles, tel que des pare-brise, peut-être constitué d'une pièce ayant la forme générale d'un L, dont l'une des branches comprend à son extrémité libre au moins une partie saillante, appelée ci-après par commodité tenon, et sur la face externe de l'autre branche au moins une partie creuse, appelée ci-après par commodité mortaise.

Suivant l'invention, l'élément intercalaire peut présenter au moins un tenon et au moins une mortaise disposés à l'opposé l'un de l'autre dans un plan passant par l'une des branches du L.

Selon l'invention également, chaque élément intercalaire est muni d'au moins un tenon et d'au moins une mortaise de dimensions sensiblement égales.

Ces caractéristiques permettent d'enfoncer chaque tenon d'un élément intercalaire dans la mortaise correspondante appartenant à l'élément voisin. Il est ainsi possible de rendre solidaire l'ensemble des éléments intercalaires formant une même rangée, ce qui renforce la cohésion du lot d'articles réalisé.

La présente invention a également pour objet un tel lot d'articles.

Les différentes particularités et avantages de l'invention ressortiront de la description détaillée ci-après de plusieurs modes de réalisation illustrés par les dessins annexés, selon lesquels :
- la figure 1 est une vue en perspective d'éléments intercalaires selon un premier mode de réalisation, qui représente lesdits éléments assemblés et séparant des pare-brise,
- la figure 2 est une coupe suivant II-II de la figure 1,
- la figure 3 est une vue en perspective de deux éléments intercalaires suivant un deuxième mode de réalisation,
- la figure 4 est une vue en perspective de deux éléments intercalaires suivant un troisième mode de réalisation.

Dans l'invention telle que décrite ci-après, les éléments intercalaires conformes à l'invention sont représentés dans le cadre d'une application particulière : celle de la manutention des pare-brise pour véhicules automobiles.

Dans cette application, les pare-brise sont généralement transportés en position sensiblement verticale. La disposition générale de ces articles, en vue de leur transport, est clairement décrite dans la publication française FR 2 506 728, à laquelle on pourra utilement se référer. Dans ce document il est précisé que la base des pare-brise est calée dans les créneaux d'une crémaillère.

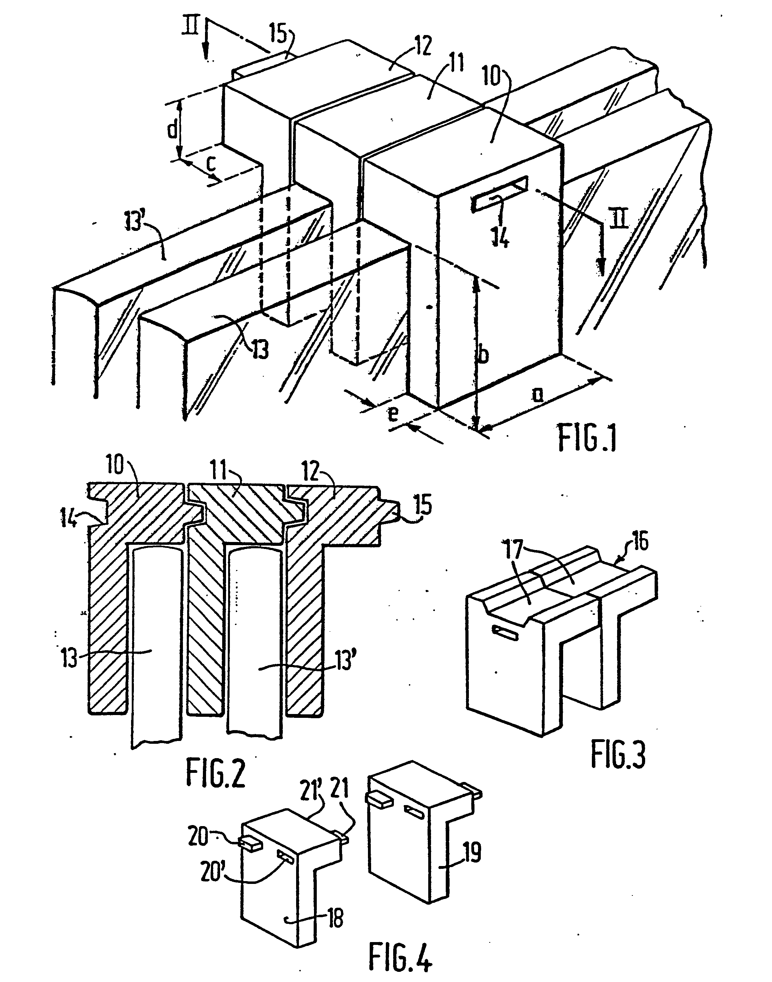

En référence aux figures 1 et 2, les éléments intercalaires 10, 11, 12 suivant l'invention sont représentés en position d'assemblage séparant la partie supérieure des pare-brise 13 et 13', disposés verticalement sur une palette non représentée.

Les éléments intercalaires suivant l'invention ont sensiblement la forme d'un L, dont les différentes dimensions a, b, c, d, e sont déterminées en fonction de l'article à transporter; en particulier la dimension c est fonction de l'épaisseur dudit article.

Si, pour des raisons de sécurité, il est souhaitable de caler les articles sur une assez grande hauteur la dimension b pourra être importante.

Dans le cas de transport d'articles de grande surface mais de faible épaisseur, le rapport c/b pourra être égal et même inférieur à 1/15. La forme en L est alors très peu marquée.

Chaque élément comprend un tenon et une mortaise, tels que 14 et 15 appartenant respectivement aux éléments 10 et 12, disposés à l'opposé l'un de l'autre dans un plan passant par la petite branche du L. Lesdits éléments sont donc assemblés en insérant chaque tenon d'un élément dans la mortaise de l'élément suivant ainsi que le représentent les figures 1 et 2, et forment une rangée présentant une certaine rigidité. Celle-ci est néanmoins insuffisante pour maintenir le calage des articles tels que des pare-brise.

Ce calage peut être obtenu au moyen d'une sangle prenant appui sur le sommet des éléments intercalaires, ladite sangle étant fixée à ses extrémités aux montants de la palette. Il peut être également obtenu au moyen d'une barre, profilée en U, venant coiffer lesdits éléments, selon la disposition représentée à la figure 10 du document précité.

La figure 3 permet de montrer que le moyen de calage choisi peut coopérer avec les éléments intercalaires suivant l'invention. Ainsi, il est possible de définir une gorge 10 à partir de l'alignement d'entailles 17, pratiquées sur la face externe de l'une des branches du L. Le moyen de calage, tel que sangle, feuillard, barre ou tube, associés ou non, sera inséré dans la gorge 10, dont le profil sera adapté audit moyen choisi.

Les éléments intercalaires suivant l'invention peuvent être réalisés en différents matériaux, selon la nature de l'article à transporter. Lorsqu'il s'agit de réaliser des lots d'articles fragiles, les éléments intercalaires seront formés d'un matériau semi-rigide, par exemple une matière plastique expansée, afin de pouvoir absorber par déformation une partie de la pression exercée par les moyens de calage. Dans le cas des pare-brise, les éléments utilisés, obtenus par moulage, sont en polystyrène expansé.

Naturellement, la forme des éléments intercalaires pourra être adaptée à l'article à transporter. Ainsi les pare-brise comportent souvent sur l'une de leurs faces, à proximité de leur pourtour, un dépôt ou une couche d'apprêt qu'il est souhaitable de ne pas toucher avant leur montage. Dans ce cas particulier, les éléments intercalaires comporteront, sur la face externe du L séparant deux articles, un évidement s'étendant sur toute ladite face à la hauteur de la couche ou du dépôt à protéger.

D'autres variantes sont possibles, ainsi celle illustrée par la figure 4. Cette figure représente des éléments 18 et 19 dont la structure est dite en "tenons croisés". Chacun des éléments porte à chaque extrêmité de la branche du L un tenon 20, 21 et une mortaise 20', 21' côte à côte.

Il est également possible de prévoir, sur l'une des faces ou sur les deux faces de la branche du L séparant les articles, des évidements, des entailles, des stries, des rainures ou des parties en relief destinés à alléger les éléments intercalaires ou à atténuer les risques de glissement éventuel sur la surface de l'article transporté, ou bien encore, comme décrit précédemment, à éviter le contact d'une partie de la branche du L avec une partie de la surface de l'article transporté.

Dans les exemples décrits précédemment, les éléments intercalaires séparent des pare-brise en position sensiblement verticale. Il est évidemment possible de réaliser des lots d'articles selon lesquels lesdits articles présentent une inclinaison plus ou moins prononcée. Les éléments contigus seront alors munis de tenons et mortaises ménagés en conséquence, pour tenir compte des décalages qu'impliquent une telle présentation.

Le prélèvement des articles ainsi séparés peut être effectué dès que le moyen de calage supplémentaire est escamoté. En effet, dans le cas représenté figures 1 et 2 par exemple, le prélèvement du pare-brise 13 par un robot provoque, dès le début de l'opération, la désolidarisation des éléments 11 et 10 et la chute naturelle de ce dernier élément.

L'homme de l'art pourra apporter toute modification qui lui paraîtra utile, ou utiliser différemment les éléments intercalaires, en s'inspirant des exemples décrits, sans sortir pour autant du cadre de l'invention.

Il pourra notamment réaliser un lot d'articles en feuilles assemblés sur un dispositif de manutention telle qu'une palette, ces articles étant séparés par des éléments intercalaires selon l'invention, lesdits éléments étant disposés sur au moins un des côtés desdits articles.

## Revendications

1. Elements intercalaires ou entretoises (10, 11, 12) pour la réalisation d'un lot d'articles en feuilles, tels que des pare-brise (13, 13'), disposés sur les bords desdits articles de manière à assurer leur séparation physique, caractérisé en ce que ledit élément est constitué d'une pièce ayant la forme d'un L, dont une branche est interposée entre deux articles voisins, l'autre branche reposant sur la tranche d'un desdits articles.

2. Elements intercalaires selon la revendication 1, caractérisé en ce qu'ils ont des profils complémentaires afin de permettre l'emboîtement des éléments contigus (10, 11).

3. Elements intercalaires ou entretoises selon la revendication 2, caractérisé en ce que l'extrémité libre de l'une des branches du L est munie d'au moins une partie saillante ou tenon (15), la face externe de l'autre branche étant munie d'au moins une partie creuse ou mortaise (14).

4. Elements intercalaires selon la revendication 3, caractérisé en ce que lesdits éléments sont munis d'au moins un tenon (15) et au moins une mortaise (14), disposés à l'opposé l'un de l'autre dans un plan passant par l'une des branches du L.

5. Elements intercalaires selon l'une des revendications 3 et 4, caractérisé en ce que chaque élément est muni d'au moins un tenon et une mortaise de dimensions sensiblement égales.

6. Elements intercalaires selon l'une des revendications 3 à 5, caractérisé en ce que lesdits éléments possèdent une structure dite "en tenon croisé", telle qu'illustrée par la figure 4.

7. Elements intercalaires selon l'une des revendications 3 à 5, caractérisé en ce que la face externe de la branche du L, recouvrant la tranche d'un article en feuille, comporte au moins une entaille (17).

8. Elements intercalaires selon la revendication 7, caractérisé en ce que l'assemblage des éléments intercalaires, à tenon et à mortaise, définit au moins une gorge continue (16).

9. Elements intercalaires selon l'une quelconque des revendications précédentes, caractérisé en ce que lesdits éléments sont en polystyrène expansé.

10. Elements intercalaires selon l'une quelconque des revendications précédentes, caractérisé en ce que la branche du L, séparant deux articles en feuille, comporte sur l'une de ses faces ou sur ses deux faces des évidements, des entailles, des stries, des rainures ou des parties en relief.

11. Procédé de conditionnement d'articles en feuilles tels que des pare-brise (13, 13') séparés par des éléments intercalaires, caractérisé en ce qu'on sépare lesdits articles par au moins une série d'éléments en forme de L, tels que définis par les revendications 1 à 10, lesdits éléments étant rendus notamment solidaires par un assemblage par tenons et mortaises.

12. Procédé de conditionnement d'articles en feuilles tels que des pare-brise (13, 13') séparés par des éléments intercalaires, caractérisé en ce qu'on sépare lesdits articles par au moins une série d'éléments en forme de L, tels que définis par les revendications 8 à 10, et qu'on insère dans la gorge (10) au moins un moyen de calage tel que sangle, feuillard, barre ou tube, associes ou non.

13. Lot d'articles en feuilles (13, 13') assemblés sur un dispositif de manutention telle qu'une palette, caractérisé en ce que lesdits articles sont séparés par des éléments intercalaires selon l'une des revendications 1 à 10, disposés sur au moins un des côtés des articles (13, 13').

**Patentansprüche**

1. Zwischen- oder Abstandselemente (10, 11, 12) zur Bildung eines Stapels von scheibenartigen Gegenständen, wie Windschutzscheiben (13, 13'), welche zwecks Beabstandung der Gegenstände auf deren Rändern angeordnet sind,
   dadurch gekennzeichnet,
   daß das Element aus einem L-förmigen Teil gebildet ist, dessen einer Schenkel zwischen zwei benachbarten Gegenständen angeordnet ist und dessen anderer Schenkel auf dem Rand eines dieser Gegenstände aufliegt.

2. Zwischenelement nach Anspruch 1,
   dadurch gekennzeichnet,
   daß die Elemente komplementare Profile zum Ineinandergreifen benachbarter Elemente (10, 11) aufweisen.

3. Zwischen- oder Abstandselemente nach Anspruch 2,
   dadurch gekennzeichnet,
   daß das freie Ende eines der L-Schenkel mit mindestens einem vorspringenden Teil oder Zapfen (15) versehen ist und daß die Außenfläche des anderen Schenkels mit mindestens einer Hohlkammer oder einer Aussparung (14) versehen ist.

4. Zwischenelemente nach Anspruch 3,
   dadurch gekennzeichnet,
   daß die Elemente mit mindestens einem Zapfen (15) und mindestens einer Aussparung (14) versehen sind, welche einander in einer Ebene gegenüberliegend angeordnet sind, die durch einen der L-Schenkel verläuft.

5. Zwischenelemente nach einem der Ansprüche 3 und 4,
   dadurch gekennzeichnet,
   daß jedes Element mit mindestens einem Zapfen und einer Aussparung mit im wesentlichen gleichen Abmessungen versehen ist.

6. Zwischenelemente nach einem der Ansprüche 3 bis 5,
   dadurch gekennzeichnet,
   daß die Elemente eine sogenannte "Überkreuzzapfung" gemäß Fig. 4 aufweisen.

7. Zwischenelemente nach einem der Ansprüche 3 bis 5,
   dadurch gekennzeichnet,
   daß die Außenfläche des L-Schenkels, der den Rand eines Gegenstandes bedeckt, mindestens eine Einkerbung (17) aufweist.

8. Zwischenelemente nach Anspruch 7,
   dadurch gekennzeichnet,
   daß die Einheit der miteinander verzapften Zwischenelemente mindestens eine kontinuierliche Nut (16) bestimmt.

9. Zwischenelemente nach einem der vorhergehenden Ansprüche,
   dadurch gekennzeichnet, daß die Elemente aus expandiertem Polystyrol hergestellt sind.

10. Zwischenelemente nach einem der vorhergehenden Ansprüche,
   dadurch gekennzeichnet,
   daß der L-Schenkel, der die beiden scheibenartigen Gegenstände trennt, auf einer seiner Seiten oder seiner beiden Seiten Vertiefungen, Aussparungen, Riefen, Rillen oder erhabene Abschnitte aufweist.

11. Verfahren zum Zusammenpacken von scheibenartigen Gegenständen, wie Windschutzscheiben (13, 13'), die durch Zwischenelemente getrennt sind,
   dadurch gekennzeichnet,
   daß man die Gegenstände durch mindestens eine Reihe von L-förmigen Elementen gemäß den Ansprüchen 1 bis 10 trennt, wobei diese Elemente besonders durch eine Loch/Zapfen-Verbindung verbunden sind.

12. Verfahren zum Zusammenpacken von scheibenartigen Gegenständen, wie Windschutzscheiben (13, 13'), welche durch Zwischenelemente getrennt sind,
   dadurch gekennzeichnet,

daß man die Gegenstände durch mindestens eine Reihe von L-förmigen Elementen gemäß den Ansprüchen 8 bis 10 trennt und daß man in die Nut (16) mindestens eine Verschlußeinrichtung einsetzt, wie Gurte, Bander, Stange oder Rohr u. dgl..

13. Stapel von scheibenartigen Gegenständen (13, 13'), welche auf einer Transporteinrichtung, wie eine Palette, angeordnet sind,

dadurch <u>gekennzeichnet</u>,

daß die Gegenstände durch Zwischenelemente nach einem der Ansprüche 1 bis 10 voneinander getrennt sind, welche auf mindestens einer der Seiten der Gegenstände (13, 13') angeordnet sind.

## Claims

1. Intermediate or spacer elements (10, 11, 12) for use in assembling a batch of sheet articles, such as windscreens (13, 13'), arranged on the edge portions of said articles to ensure their physical separation, characterised in that said element comprises an L-shaped member, of which one branch is interposed between two adjacent articles, the other branch resting on the edge of one of said articles.

2. Intermediate elements according to claim 1, characterised in that they have complementary sections to allow nesting of contiguous elements (10, 11).

3. Intermediate or spacer elements according to claim 2, characterised in that the free end of one of the branches of the L is provided with at least one outwardly projecting part or tenon (15), the external surface of the other branch being provided with at least one hollowed part or mortice (14).

4. Intermediate elements according to claim 3, characterised in that said elements are provided with at least one tenon (15) and at least one mortice (14), arranged opposite each other in a plane passing through one of the branches of the L.

5. Intermediate elements according to claim 3 or 4, characterised in that each element is provided with at least one tenon and mortice of substantially the same dimensions.

6. Intermediate elements according to any one of claims 3 to 5, characterised in that said elements have a structure called a "crossed tenon" structure, such as shown in Figure 4.

7. Intermediate elements according to any one of claims 3 to 5, characterised in that the external surface of the branch of the L covering the edge of a glass article comprises at least one indent 17.

8. Intermediate elements according to claim 7, characterised in that the assembly of intermediate elements, by their tenons and mortices, defines at least one continuous groove (16).

9. Intermediate elements according to any one of the preceding claims, characterised in that said elements are of expanded polystyrene.

10. Intermediate elements according to any one of the preceding claims, characterised in that the branch of the L separating two sheet articles comprises on one of its surfaces or on both surfaces openings, indents, slots, grooves or reliefs.

11. A method of packing sheet articles such as windscreens (13, 13') separated by intermediate elements, characterised in that said articles are separated by at least one series of L-shaped elements as defined by any one of claims 1 to 10, said elements being joined together notably by tenon and mortice assembly.

12. A method of packing sheet articles such as windscreens (13, 13') separated by intermediate elements, characterised in that said articles are separated by at least one series of L-shaped elements as defined by any one of claims 8 to 10, and there is inserted in the groove (16) at least one connected or unconnected retaining means such as a strap, band, bar or tube.

13. A batch of sheet articles (13, 13') assembled together on a handling device such as a pallet, characterised in that said articles are separated by intermediate elements according to any one of claims 1 to 10, arranged on at least one of the sides of the articles (13 13').

FIG.1

FIG.2

FIG.3

FIG.4